Europäisches Patentamt

European Patent Office

Office européen des brevets

(11) Publication number: **0 068 355**
**B1**

# EUROPEAN PATENT SPECIFICATION

(45) Date of publication of patent specification: **05.03.86**

(51) Int. Cl.⁴: **B 21 K 1/36**

(21) Application number: **82105356.8**

(22) Date of filing: **18.06.82**

(54) Rotor and method of making same.

(30) Priority: **22.06.81 US 275949**

(43) Date of publication of application:
**05.01.83 Bulletin 83/01**

(45) Publication of the grant of the patent:
**05.03.86 Bulletin 86/10**

(84) Designated Contracting States:
**CH DE FR GB IT LI SE**

(56) References cited:
**AT-B- 182 287**
**DE-A-2 363 722**
**FR-A-1 341 636**
**US-A-2 967 488**
**US-A-3 341 924**
**US-A-3 464 100**

(73) Proprietor: **Vickers, Incorporated**
**1401 Crooks Road**
**Troy Michigan 48084 (US)**

(72) Inventor: **Stephan, Robert William**
**45015 Mayo Drive**
**Northville Michigan 48167 (US)**

(74) Representative: **Zwirner, Gottfried, Dipl.-Ing.**
**Dipl.-W.-Ing.**
**BLUMBACH-WESER-BERGEN-KRAMER-**
**ZWIRNER Patentanwälte**
**Sonnenberger Strasse 43**
**D-6200 Wiesbaden 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of making a rotor of a fluid energy translating device, and to the rotor so produced.

Fluid pumps or motors of the sliding vane type are known (US—A—2,967,488) which dispose of so-called intra-vane chambers under high pressure and under vane chambers which are subjected to cyclically changing pressures. Each vane has a reaction member to seal the intra-vane chamber with respect to the under vane chamber. In order to feed high pressure fluid to the intra-vane chambers, annular grooves in the cheek plates and axial passages in the rotor intersecting the vane slots have been used. This high pressure fluid tends to leak through the interfaces between the cheek plates and the rotor to the low pressure zones.

In order to avoid this leakage flow, an annular passageway (US—A—3,223,044) is arranged near the shaft of the rotor and is used to connect the intra-vane chambers. A check valve must be associated with each vane to control the flow of fluid to the chambers. A further possibility is shown (US—A—3,223,044) in that the rotor is made in two halfs, each of which has an annular groove in a radial face so that when the faces of the two halfs are brought into contact and joined together, the two grooves face one another to form the annular passageway. This way of making a rotor is costly because it has to withstand the hydraulic forces which tend to move the halfs away from one another and create a leakage path.

The present invention is directed to the manufacture of a rotor to be used in a fluid pump or motor of the sliding vane type which is easier and less costly to manufacture and which results in a rotor that has higher strength.

A forged piston having an oil gallery is known (US—A—3,341,924) which is made starting from an annular groove in the piston end face. The piston blank is heated to forging temperature in the region of 400 to 500°C. A ring, which melts below that temperature, is inserted into the annular groove which, thereupon, is closed by forging on the end face of the piston blank. A plurality of holes are drilled through the bottom wall of the piston head and the material of the melted ring is removed. This method cannot be used for making rotors of the sliding vane type since the annular groove does not open into a generally flat side of the blank but opens at the periphery which is generally cylindrically formed.

Another known piston (US—A—3,464,100) has a cooling fluid circulation arrangement including an annular duct and a plurality of recesses which are blocked and filled by a plurality of annular segments. The annular duct is undercut and, therefore, costly to make.

The rotor can be made easier and less costly and with higher strength when applying the features of claim 1.

The method comprises forming an annular groove in the periphery of a solid body, closing the open side of the groove to provide the annular passage, thereafter forming radial vane slots in the body intersecting the annular passage and forming axial openings in the body intersecting the annular passage.

Description of the Drawings

FIG. 1 is a partial longitudinal sectional view through a pump embodying the invention.

FIG. 2 is a sectional view of a rotor forming a part of the pump shown in FIG. 1.

FIG. 3 is a fragmentary perspective view of a portion of the pump.

FIGS. 4—10 show successive steps in making the rotor shown in FIG. 2.

FIGS. 11 and 12 show modified steps when forming the rotor shown in FIG. 2.

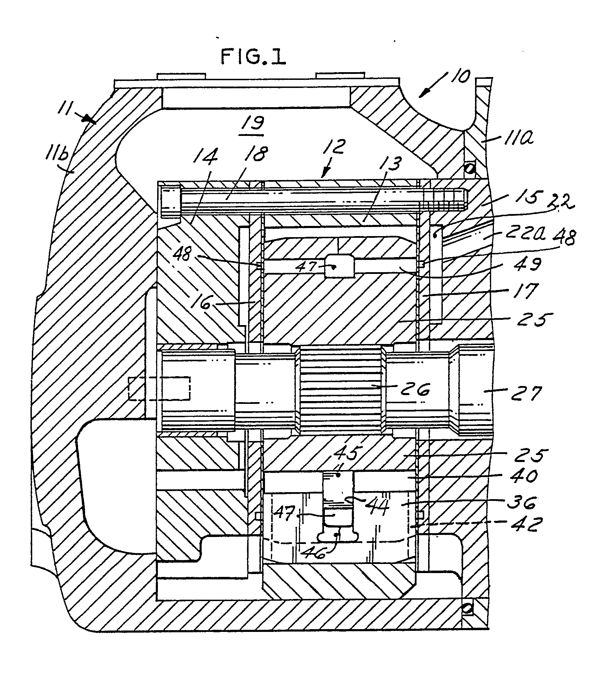

As shown in FIG. 1, a rotary sliding vane device or pump 10 comprises a casing 11 and a cartridge or subassembly 12. Casing 11 includes a body 11a and a cover 11b. The cartridge 12 includes a cam ring 13 sandwiched between support plates 14, 15 with intermediate cheek plates 16, 17 all of which are secured to each other by bolts 18 extending through support plate 14 and cam 13 into threaded holes in support plate 15. The cover 11b is provided with an inlet supply connection port 19 leading to inlet zones of the pump through passages formed around the cam ring 13 and opening in the cheek plates 16, 17.

An outlet connection port, not shown, is provided in the body 11a which is directly connected by a passage 22a to a fluid discharge chamber 22 formed in support plate 15.

A rotor 25 is rotatably mounted within the cam ring 13 on the splined portion 26 of a shaft 27 which is rotatably mounted within the casing 11.

Cam ring 13 has an internal contour which is substantially oval in shape and which, together with the periphery of the rotor 25 and the adjoining surfaces of the cheek plates 16, 17, define two opposed pumping chambers each of which has fluid inlet and fluid outlet zones.

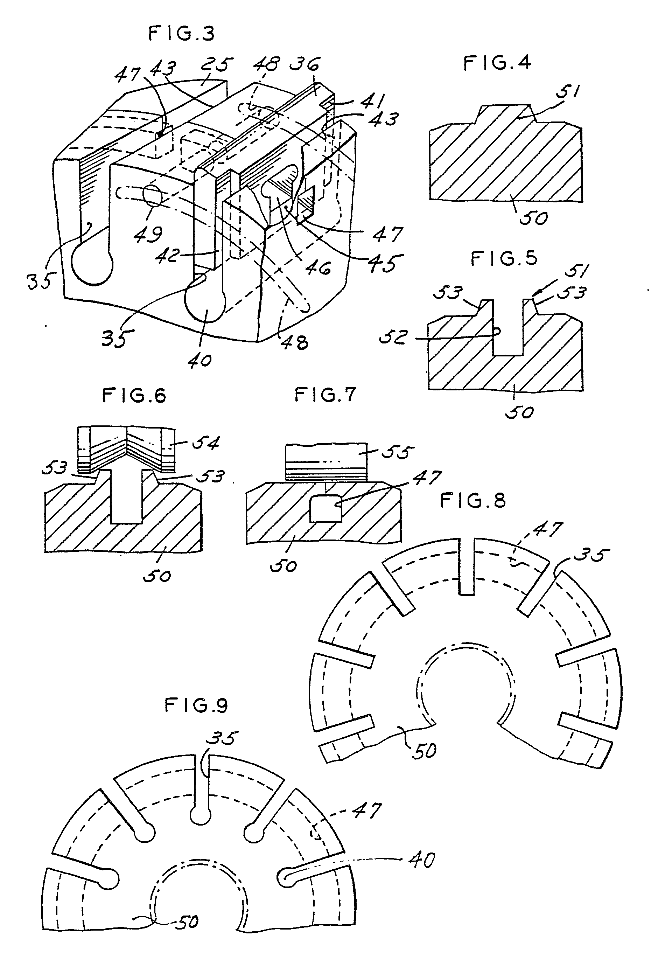

The rotor is provided with a plurality of radial vane slots 35 (FIG. 2) each of which has a vane 36 (FIG. 1) slidably mounted therein. The outer ends or vane tips of the vanes 36 engage the inner contour of cam ring 13 which includes an inlet rise portion, a first intermediate arc portion, an outlet fall portion, and a second arc portion. The cam contour is symmetrical about its minor axis, thus each of the rise, fall and arc portions are duplicated in the second opposed portion of the contour. As the tips of the vanes 36 carried by the rotor 25 traverse the inlet rise portions, the vanes 36 move radially outward with respect to the rotor 25, and when the vane tips traverse the outlet fall portions, the vanes 36 move radially inward. The spacing between each pair of vanes 36 is adapted to span the distance between each pair of ports in a manner to provide proper sealing between the inlet and outlet of the pumping device.

Each vane 36 has a rectangular notch 44 extending from the inner end or base of the vane to substantially the mid-section thereof. A reaction member 45 comprises a flat sided blade substantially equal in width and thickness to that of the notch 44 so as to have a sliding fit within the vane 36 and the rotor 25, i.e. the side walls of each vane slot 35. The side walls of each vane slot 35 and notch 44 in the vane 36 together with the reaction member 45 therein define an expansible intravane chamber 46. An under vane chamber 40 is defined by the base of each vane 36 and the base and side walls of each rotor vane slot 35. Pairs of chambers 46 and 40 are separated by and sealed from each other by each a reaction member 45.

Along each side of each vane 36, a radial passage 42 extends which provides fluid pressure to its under vane chamber 40. Each radial passage 42 is defined by a groove 41 (FIG. 3) in each of the vane, by a surface 43 of the rotor vane slot 35, and by the inner surface of cheek plates 16, 17. The radial passages 42 transmit fluid to the under vane chambers 40, and, thus, to the bases of the vanes 36. Thus, the cyclically changing pressure which is exerted on the tips of the vanes 36 as they traverse the inlet and outlet portions of the cam contour is transmitted to the bases of the vanes 36.

An annular closed passage 47 entirely within rotor 25 provides communication between the intra-vane chambers 46.

Axial openings 49 formed in the side of rotor 25 extend to and intersect with the annular passage 47. Fluid under pressure from radial passages 42 is supplied to the annular passage 47 by an arcuate valving groove 48 in the inner face of each cheek plates 16, 17. The groove 48 extends about a portion of the travel of rotor 25 in the outlet fall or high pressure zone. As the rotor 25 rotates, radial passage 42 communicates through arcuate groove 48 with axial opening 49 and with annular passage 47. Since the vanes 36 are moving radially inward in the outlet fall zones, the vanes 36 displace fluid from the under vane chambers 40 through the restriction provided by the radial passages 42. An elevated fluid pressure gradient is thereby produced in the radial passages 42. As the radial passages 42 move across the arcuate groove 48, the elevated fluid pressure is transmitted to the intra-vane chambers 46 through the axial openings 49 and the annular passage 47. The elevated fluid pressure is continuously transmitted to the intra-vane chambers 46 and acts to move the vanes 36 radially outward and hold the reaction members 45 against the base of the under vane chambers 40.

Referring to FIGS. 4—10, in accordance with the invention, rotor 25 is preferably made by machining a cylindrical body 50 on a screw machine or the like. The body 50 is first formed with an axial opening along its centerline, a spline 26 is preferably formed in the axial opening and then the body 50 is mounted for machining utilizing the splined opening 26 a means for aligning and supporting the body. The body 50 is then machined to form an annular rib 51 on the periphery thereof. Further machining forms an annular groove 52 with spaced projections 53.

The projections 53 are then deformed by cold rolling utilizing successive tools 54, 55 to close the open side of the groove 52 and thus form the internal annular passage 47. The projections 53 are formed into sufficient fluid tight relation to maintain hydraulic pressure in the annular passage 47.

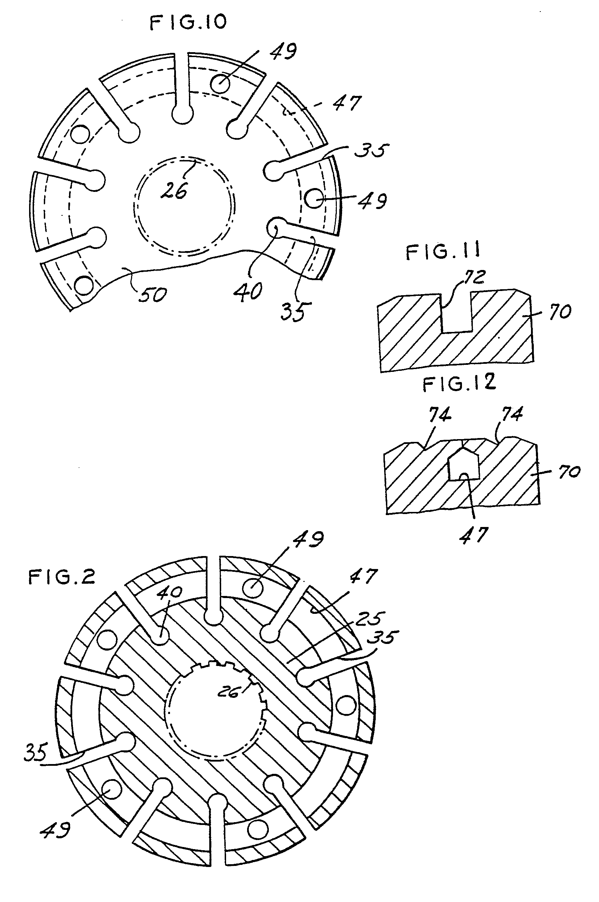

The radial vane slots 35 and openings for the under vane chambers 40 are then (FIGS. 8, 9) machined at circumferentially spaced points for receiving the vanes 36. Axial openings 49 which intersect the annular passage 47 are machined through the body 50 as by drilling (FIG. 10). The axial openings 49 may be formed prior to or after the formation of the radial slots 35 and prior to or after forming and closing groove 52.

After carburizing and case hardening, a final machining of the slots 35 is made preferably by grinding.

Inasmuch as three sides of the internal passage 47 are formed in the rotor body and the fourth side is formed by deforming the projections 53, fluid pressure forces acting in the direction of the rotor axis do not act on any joint surface. The stresses in deformed projections 53 due to radially outward fluid pressure are of low magnitude because of the short length of the deformed projections· resulting in a rotor of high strength.

In another embodiment of the invention as shown in FIGS. 11 and 12, a modified rotor is formed by machining an annular groove 72 in a cylindrical body 70 and upsetting the material on either side of the groove 72 as at 74 so as to close the opening of groove 72 into sufficient fluid tight relation so as to maintain hydraulic pressure in annular passage 47 formed by the closing thereof.

Since three sides of the annular passage 47 are formed in the one-piece body, the fluid pressure forces in the direction of the rotor axis do not react on any joint connection. The stresses due to radially outward fluid pressure on the joined surfaces, which are small, are of a low magnitude resulting in a high strength rotor assembly.

The method is such that high volume production of the rotor is possible.

**Claims**

1. The method of making a rotor (25) of a fluid energy translating device which comprises forming an axial center opening in a solid body (50, 70) of generally cylindrical shape,
   forming an annular groove (52, 72) in the cylindrical face of said body (50, 70) around the periphery thereof,
   closing the open side of said groove (52, 72) by a cold forming process to provide an annular passage (47) entirely within the body (50, 70) to provide a fluid pressure seal at the cylindrical face,
   thereafter forming radial slots (35) in the periphery of said body (50, 70) intersecting said annular passage (47), and
   forming axial openings (49) in said body (50, 70) intermediate said slots (35) intersecting said annular passage (47).

2. The method set forth in claim 1 wherein said step of closing said open side of said groove (52) comprises forming integral radially extending projections (53) in said body and thereafter deforming said projections (53) axially toward one another and radially inward to close the open side of said groove (52).

3. The method set forth in claim 2 wherein said step of forming said projections (53) is performed prior to said step of forming said groove (52).

4. The method set forth in claim 1 wherein said cold forming process comprises upsetting the material (74) on either side of said annular groove (72) to form said annular passage (47).

5. A rotor made in accordance with claims 1 to 4, comprising

a solid one-piece body (50, 70) of generally cylindrical shape,

an annular groove (52, 72) in the periphery of said body (50, 70),

shaped material (53, 74) from said one-piece body (50, 70) closing said groove (52, 72) to form an annular passage (47),

a plurality of circumferentially spaced radial vane receiving slots (35) in said body (50, 70) intersecting said annular passage (47), and

an axial opening (49) in the body (50, 70) leading to said annular passage (47).

## Patentansprüche

1. Verfahren zur Herstellung eines Rotors (25) einer Fluid-Energie-Umwandlungsmaschine mit folgenden Schritten:

in einem festen Körper (50, 70) von im großen und ganzen zylindrischer Gestalt wird eine mittige axiale Öffnung gebildet;

im Zylindermantel des Körpers (50, 70) um dessen Peripherie herum wird eine Ringnut (52, 72) gebildet;

die offene Seite der Nut (52, 72) wird zur Bildung eines ringförmigen, ganz innerhalb des Körpers (50, 70) verlaufenden Kanals (47) durch Kaltverformung geschlossen, und zwar um eine Abdichtung an dem Zylindermantel gegenüber Fluiddruck zu schaffen;

danach werden radiale Schlitze (35) in der Peripherie des Körpers (50, 70) gebildet, welche den ringförmigen Kanal (47) schneiden, und zwischen den Schlitzen (35) werden in den Körper (50, 70) axiale Bohrungen (47) angebracht, welche den ringförmigen Kanal (47) schneiden.

2. Verfahren nach Anspruch 1, bei welchem der Schritt des Schließens der offenen Seite der Nut (52) die Bildung von radial sich erstreckenden, integralen Vorsprüngen (53) an dem Körper einschließt, wonach diese Vorsprünge (53) in axialer Richtung zueinander und radial einwärts deformiert werden, um die offene Seite der Nut (52) zu schließen.

3. Verfahren nach Anspruch 2, wobei der Schritt der Bildung der Vorsprünge (53) vor dem Schritt der Bildung der Nut (52) durchgeführt wird.

4. Verfahren nach Anspruch 1, wobei die Kaltverformung des Stauchen des Materials (74) zu beiden Seiten der ringförmigen Nut (72) zur Bildung des ringförmigen Kanals (47) einschließt.

5. Rotor hergestellt gemäß Ansprüchen 1 bis 4 und mit folgender Ausbildung:

ein fester einstückiger Körper (50, 70) weist eine im großen und ganzen zylindrische Gestalt auf;

eine ringförmige Nut (52, 72) ist in der Peripherie des Körpers (50, 70) angebracht;

verformtes Material (53, 74) von dem einstückigen Körper (50, 70) verschließt die Nut (52, 72) zur Bildung eines ringförmigen Kanals (47);

in dem Körper (50, 70) sind eine Mehrzahl von Schlitzen (35) in Umfangsrichtung verteilt angeordnet sowie zur Aufnahme der radialen Flügel vorgesehen und schneiden den ringförmigen Kanal (47), und

eine axiale Bohrung (49) in dem Körper (50, 70) führt zu dem ringförmigen Kanal (47).

## Revendications

1. Procédé de fabrication de rotor (25) de dispositif de transformation d'énergie de fluide caractérisé en ce qu'il comprend le façonnage d'un trou central axial dans un corps plein (50, 70) de forme générale cylindrique, le façonnage d'une rainure annulaire (52, 72) dans la face cylindrique dudit corps (50, 70) sur le pourtour de ce dernier, la fermeture du côté ouvert de ladite rainure (52, 72) opérée par une technique de façonnage à froid pour ménager un passage annulaire (47) entièrement intérieur au corps (50, 70) pour établir l'étanchéité à la pression de fluide au niveau de la face cylindrique, puis le façonnage dans le pourtour dudit corps (50, 70) de fentes radiales (50) coupant ledit passage annulaire (47), et le façonnage dans ledit corps (50, 70) entre lesdites fentes (35) de trous axiaux (49) coupant le dit passage annulaire (47).

2. Procédé selon la revendication 1, caractérisé en ce que ladite opération de fermeture dudit côté ouvert de ladite rainure (52) comprend le façonnage dans ledit corps de ressauts intégrants s'étendant radialement (53) puis la déformation de ces ressauts (53) axialement l'un vers l'autre et radialement vers l'intérieur pour fermer le côté ouvert de ladite rainure (52).

3. Procédé selon la revendication 2, caractérisé en ce qu'on effectue ladite opération de façonnage desdits ressauts (53) avant ladite opération de façonnage de ladite rainure (52).

4. Procédé selon la revendication 1, caractérisé en ce que ladite technique de façonnage à froid comporte le refoulement de la matière (74) située de part et d'autre de ladite gorge annulaire (72) en vue du façonnage dudit passage annulaire (47).

5. Rotor fabriqué selon les revendications 1 à 4, caractérisé en ce qu'il comprend un corps plein d'une seule pièce (50, 70) de forme générale cylindrique, une rainure annulaire (52, 72) ménagée dans le pourtour dudit corps (50, 70), de la matière profilée (53, 74) venue dudit corps d'une seule pièce (50, 70) fermant ladite rainure (52, 72) pour définir un passage annulaire (47), une pluralité de fentes espacées de réception de palette radiales (35) ménagées dans ledit corps (50, 70) et coupant ledit passage annulaire (47), et un trou axial (49) ménagé dans le corps (50, 70) menant audit passage annulaire (47).

FIG.1

0 068 355

FIG.3

FIG.4

FIG.5

FIG.6

FIG.7

FIG.8

FIG.9

2

FIG.10

49

47

35

26

49

50

40

35

FIG.11

72

70

FIG.12

74    74

70

47

FIG.2

49

40

47

25

35

26

35

49